Europäisches Patentamt

European Patent Office

Office européen des brevets

(11) Veröffentlichungsnummer: **0 219 675**

A1

## (12) EUROPÄISCHE PATENTANMELDUNG

(21) Anmeldenummer: 86112625.8

(22) Anmeldetag: 12.09.86

(51) Int. Cl.⁴: **A47J 31/54** , H05B 3/68 , F24C 15/10

(30) Priorität: 05.10.85 DE 3535687

(43) Veröffentlichungstag der Anmeldung:
29.04.87 Patentblatt 87/18

(84) Benannte Vertragsstaaten:
AT BE DE FR GB NL

(71) Anmelder: **Braun Aktiengesellschaft**
**Rüsselsheimer Strasse 22**
**D-6000 Frankfurt/Main(DE)**

(72) Erfinder: **Weller, Albrecht, Dr.**
**Hessenring 81**
**D-6374 Steinbach/Ts(DE)**
Erfinder: **Moravek, Peter**
**Königsteiner Strasse 48**
**D-6232 Bad Soden(DE)**
Erfinder: **Amsel, Klaus**
**Wallstrasse 37a**
**D-6370 Oberursel(DE)**
Erfinder: **Trebitz, Bernd, Dr.**
**Mayersgärten 13**
**D-6240 Königstein(DE)**
Erfinder: **Schmidt, Jürgen**
**Wilhelminenstrasse 4**
**D-6140 Bernsheim/Auerbach(DE)**
Erfinder: **Heimrath, Ernst**
**Herrngasse 3**
**D-6232 Bad Soden 2(DE)**

(54) **Warmhalteplatte, insbesondere für eine elektrische Kaffeemaschine.**

(57) Die insbesondere für eine elektrische Kaffeemaschine vorgesehene Warmhalteplatte 1 besteht unter anderem aus einem unter der Warmhalteplatte 1 angeordneten elektrischen Heizelement 2. Die Wärmeankoppelung des Heizelements 2 an die Warmhalteplatte 1 erfolgt durch ein temperaturempfindliches Element 9, das den Abstand zwischen dem Heizelement 2 und der Warmhalteplatte 1 automatisch regelt.

FIG.2

Die Erfindung betrifft eine Warmhalteplatte, insbesondere für eine elektrische Kaffeemaschine, mit einer unter der Warmhalteplatte angeordneten elektrischen Heizeinrichtung, wobei die Wärmeankoppelung der Heizeinrichtung an die Warmhalteplatte durch Einstellung des Abstands zwischen der Heizeinrichtung und der Warmhalteplatte veränderbar ist.

Eine derartige Warmhalteplatte ist bereits aus der DE-C3-25 03 844 bekannt. Zur Temperaturregelung der Warmhalteplatte bzw. der Flüssigkeit, die sich in einem auf der Warmhalteplatte abgestellten Gefäß befindet, dient eine seitlich am Gehäuse der Warmhalteplatte angeordnete, mechanische Verstelleinrichtung, durch die der Abstand zwischen dem Heizelement und der Warmhalteplatte regelbar ist. Mit dieser Warmhalteplatte ist aber eine genaue Temperaturregelung der Flüssigkeit nicht möglich. Dies wäre nur dann möglich, wenn die Ist-Temperatur der Flüssigkeit im Behälter durch eine Bedienungsperson ermittelt und diese entsprechend der gewünschten Soll-Temperatur durch die Verstelleinrichtung von Hand nachgeregelt werden würde. Dieser Einstellvorgang müßte zur Einhaltung einer konstanten Temperatur insbesondere dann häufig wiederholt werden, wenn sich der Flüssigkeitsstand im Behälter mehrmals ändert, was in der Regel häufig der Fall ist.

Noch schwieriger wird eine Temperaturregelung, wenn anstelle einer Glaskanne eine Isolierkanne verwendet wird; denn hier ist es aufgrund des geringen Wärmeverlustes der Isolierkanne leicht möglich, daß die Flüssigkeit bei anliegendem Heizelement an der Warmhalteplatte bereits schon bei geringer Wärmezufuhr schnell zum Kochen gelangt, was insbesondere bei Kaffee oder Tee nicht wünschenswert ist, da diese Getränke beim wiederholten Aufkoch vorgang an Geschmack und Aroma verlieren. Zum anderen ist es auch für eine Bedienungsperson sehr lästig, ständig die Temperatur des Getränks zu kontrollieren und diese gegebenenfalls mittels der Verstelleinrichtung zu verändern.

Aufgabe der Erfindung ist es daher, eine Warmhalteplatte zu schaffen, bei der mit einfachen und kostensparenden Mitteln die Temperatur selbsttätig geregelt wird und bei der unabhängig von der im Behälter vorhandenen Flüssigkeitsmenge die Flüssigkeitstemperatur stets auf einem Optimalwert konstant gehalten wird.

Diese Aufgabe wird erfindungsgemäß dadurch gelöst, daß der Abstand zwischen der Heizeinrichtung und der Warmhalteplatte durch ein temperaturempfindliches Element regelbar ist. Durch diese Erfindung werden die obigen Nachteile vermieden. Das temperaturempfindliches Element regelt unabhängig von der Flüssigkeitsmenge im Behälter automatisch die Temperatur der Flüssigkeit, indem bei nicht vorschriftsmäßiger Temperatur der Abstand zwischen dem Heizelement und der Warmhalteplatte verändert wird. Das Getränk weist also immer die optimale Trinktemperatur auf. Bei der Auswahl eines temperaturempfindlichen Elements können praktisch alle aus dem Stand der Technik bekannten temperaturempfindlichen Elemente verwendet werden.

Als besonders kostengünstige und technisch gut funktionierende Lösung hat sich erfindungsgemäß ein temperaturempfindliches Element bewährt, das über mindestens eine erste Kontaktstelle mit einem gehäusefesten Anschlag und der über mindestens eine zweite Kontaktstelle mit der Heizeinrichtung verbunden ist. Bei Kaffee maschinen ist es weniger aufwendig, wenn das Heizelement gegenüber der Warmhalteplatte verschiebbar ist. Est ist aber auch generell denkbar, die Warmhalteplatte gegenüber dem Heizelement zu verschieben.

Damit bei noch verhältnismäßig kühler Warmhalteplatte, also bei noch anliegendem Heizelement an der Warmhalteplatte, der Wärmeübergang von der Heizeinrichtung zur Warmhalteplatte besonders hoch ist, wird erfindungsgemäß im unteren Temperaturbereich die Heizeinrichtung mit einer Vorspannkraft an die Warmhalteplatte gedrückt. Mit zunehmender Temperatur wird dann die Heizeinrichtung durch das temperaturempfindliche Elements von der Warmhalteplatte wegbewegt.

Erfindungsgemäß wird die Vorspannkraft von dem temperaturempfindlichen Elements selbst gebildet, die bei zunehmender Temperatur des temperaturempfindlichen Elements abnimmt. Durch das temperaturempfindliche Element werden also gleichzeitig der Abstand des Heizelements zur Warmhalteplatte sowie die vom Heizelement auf die Warmhalteplatte übertragene Anpreßkraft temperaturabhängig geregelt. Der temperaturempfindliche Element wirkt demnach gleichzeitig als Feder. Hierdurch werden zusätzliche Federelemente eingespart, so daß eine kostengünstige Temperaturregeleinrichtung entsteht.

Damit durch das temperaturempfindliche Element die Heizeinrichtung zuverlässig zur Warmhalteplatte hin-bzw. von der Warmhalteplatte wegbewegt wird, ist erfindungsgemäß vorgesehen, daß die erste Kontaktstelle des temperaturempfindlichen Elements an der Warmhalteplatte und daß die zweite Kontaktstelle an der Heizeinrichtung formschlüssig befestigt ist. Die bei Temperaturänderung am temperaturempfindlichen Element auftretende Verformung wirkt sich nur an der zweiten Kontaktstelle als Wegänderung aus, da diese mit der Heizeinrichtung frei bewegbar gelagert ist, während die erste Kontaktstelle formschlüssig mit der Warmhalteplatte verbunden ist, die ortsfest am Gehäuse eines Haushaltsgeräts, beispielsweise einer Kaffeemaschine, befestigt ist.

Eine besonders einfache Herstellung des temperaturempfindlichen Elements läßt sich erfindungsgemäß dadurch erreichen, daß das temperaturempfindliche Element im wesentlichen U-förmig ausgebildet ist und daß seine freien Enden die Kontaktstellen bilden. Hierdurch wird bei einer Temperaturerhöhung am temperaturempfindlichen Element ausreichende Verformung erzielt, die eine Annäherung der zweiten Kontaktstelle zur ersten Kontaktstelle hervorruft, wodurch das mit der zweiten Kontaktstelle verbundene Heizelement von der Warmhalteplatte abhebt.

Damit das temperaturempfindliche Element von der Heizeinrichtung in entsprechend kurzer Zeit ausreichend aufgeheizt wird, ist in einer Weiterbildung der Erfindung vorgesehen, daß das temperaturempfindliche Element zusätzlich zu den beiden Kontakstellen mindestens eine dritte Kontaktstelle aufweist, die an der Heizeinrichtung anliegt. Hierdurch wird das temperaturempfindliche Element nicht nur infolge der vom Heizelement abgegebenen Wärmestrahlung erwärmt, die häufig für eine genügend große Auslenkung des temperaturempfindlichen Elements nicht ausreicht, sondern er wird zusätzlich infolge des Wärmeübergangs an der dritten Kontaktstelle erhitzt.

Bei einem U-förmig verlaufenden Heizelement, auf dessen im wesentlichen parallel zur Warmhalteplatte verlaufender Oberseite eine Platte befestigt ist, läßt sich das temperaturempfindliche Element besonders einfach dadurch befestigen, daß auf der dem Heizelement gegenüberliegenden Unterseite der Warmhalteplatte ein Zapfen angeordnet ist, daß der Zapfen die Platte und die beiden freien Enden des temperaturempfindlichen Elements über an diesen Teilen ausgebildete Bohrungen durchdringt und daß die erste Kontaktstelle orstfest mit der Platte und die zweite Kontaktstelle orstfest mit dem Zapfen verbunden ist. Durch diese Anordnung wird erreicht, daß das temperaturempfindliche Element nicht zwischen der Warmhalteplatte und der Heizeinrichtung, sondern unterhalb der Heizeinrichtung angeordnet ist, wo genügend Freiraum für den Einbau des temperaturempfindlichen Elements zur Verfügung steht.

Es ist vorteilhaft, daß zum Befestigen des temperaturempfindlichen Elements und zum Einstellen der Vorspannkraft an der Befestigungsstelle zwischen dem Zapfen und dem temperaturempfindlichen Element eine Justiereinrichtung ausgebildet ist. Die Justiereinrichtung ermöglicht eine exakte Einstellung der Vorspannkraft, so daß unterschiedliche Vorspannkräfte, die bei der Montage infolge der unvermeidbaren Fertigungstoleranzen entstehen, nicht mehr auftreten können. Durch die Justiereinrichtung kann aber auch das temperaturempfindliche Element unterschiedlich vorgespannt werden, so daß sich an der Warmhalteplatte unterschiedliche Temperaturregelbereiche einstellen.

Eine besonders einfache und auch wieder leicht lösbare Befestigung des temperaturempfindlichen Elements am Heizelement wird dadurch erreicht, daß die erste Kontaktstelle über einen Bajonettverschluß mit der Platte formschlüssig verbunden ist. Andere Befestigungsarten sind auch möglich.

Damit das Heizelement nicht nur zur Warmhaltung der Warmhalteplatte sondern gleichzeitig zum Aufkochen des zur Zubereitung von Getränken erforderlichen Wassers dient, ist erfindungsgemäß vorgesehen, daß am Außenumfang parallel zum Heizelement ein Wasserrohr verläuft, das über den größten Bereich am Heizelement angelötet ist und das in geringem Abstand zur Platte verläuft.

Um einen besonders guten Wärmeübergang vom Heizelement zum temperaturempfindlichen Element zu erhalten, ist in einer Weiterbildung der Erfindung vorgesehen, daß im montierten Zustand des temperaturempfindlichen Elements auf der Warmhalteplatte dieses mit seinem der Heizschleife näheren Schenkel mit Vorspannung an dem Waserrohr anliegt.

Die Erfindung läßt sich besonders einfach und kostengünstig realisieren, wenn das temperaturempfindliche Element von einem Bitmetellstreifen gebildet wird. Eine besonders gleichmäßige Temperaturregelung der Warmhalteplatte läßt sich bei nur wenig Einschalthäufigkeit dadurch erreichen, daß die elektrische Heizeinrichtung gleichzeitig einen Wärmespeicher bildet. Das temperaturempfindliche Element kann entweder von der Temperatur der Warmhalteplatte, der Temperatur des Wärmespeichers oder der Temperatur des zwischen dem Wärmespeicher und der Warmhalteplatte ausgebildeten Freiraums oder von allen Elementen gleichzeitig aufgeheizt werden.

Das temperaturempfindliche Element kann auch von einem Memory-Metall gebildet werden. Derartige Memory-Metalle sind im Fachhandel preisgünstig erhältlich und eignen sich als Ausdehnungselemente besonders gut.

Eine weitere Möglichkeit der Temperaturegelung einer Warmhalteplatte, bei der unterhalb ein Wärmespeicher mit einer Heizung angeordnet ist, wird erfindungsgemäß dadurch erreicht, daß die Wärmeankopplung der Heizung mit Wärmespeicher an die Warmhalteplatte durch einen zwischen der Heizung/Wärmespeicher und der Warmhalteplatte ausgebildeten Werkstoff regelbar ist, der einen temperaturabhängigen Wärmeleitkoeffizenten aufweist. Bei Stahl mit 0,1 % Kohlenstoff nimmt beispielsweise die spezifische Wärmeleitfähigkeit mit steigender Temperatur ab, das heißt, die Temperatur der Warmhalteplatte kann auch hierdurch in gewissen Grenzen geregelt werden.

Mehrere Ausführungsbeispiele der Erfindung sind in der Zeichnung dargestellt und werden im folgenden näher beschrieben.

Es zeigen:

Fig. 1 bis 11 schematische Darstellungen von mehreren, im Längsschnitt dargestellten Ausführungsbeispielen mit verschieden ausgebildeten Bimetallstreifen zwischen einer Heizeinrichtung und einer Warmhalteplatte entsprechend der Erfindung und

Fig. 12 schematisch dargestellter Längsschnitt einer Warmhalteplatte mit einem unter der Warmhalteplatte angeordneten Wärmespeicher, der über ein temperaturempfindliches Element mit der Warmhalteplatte verbunden ist.

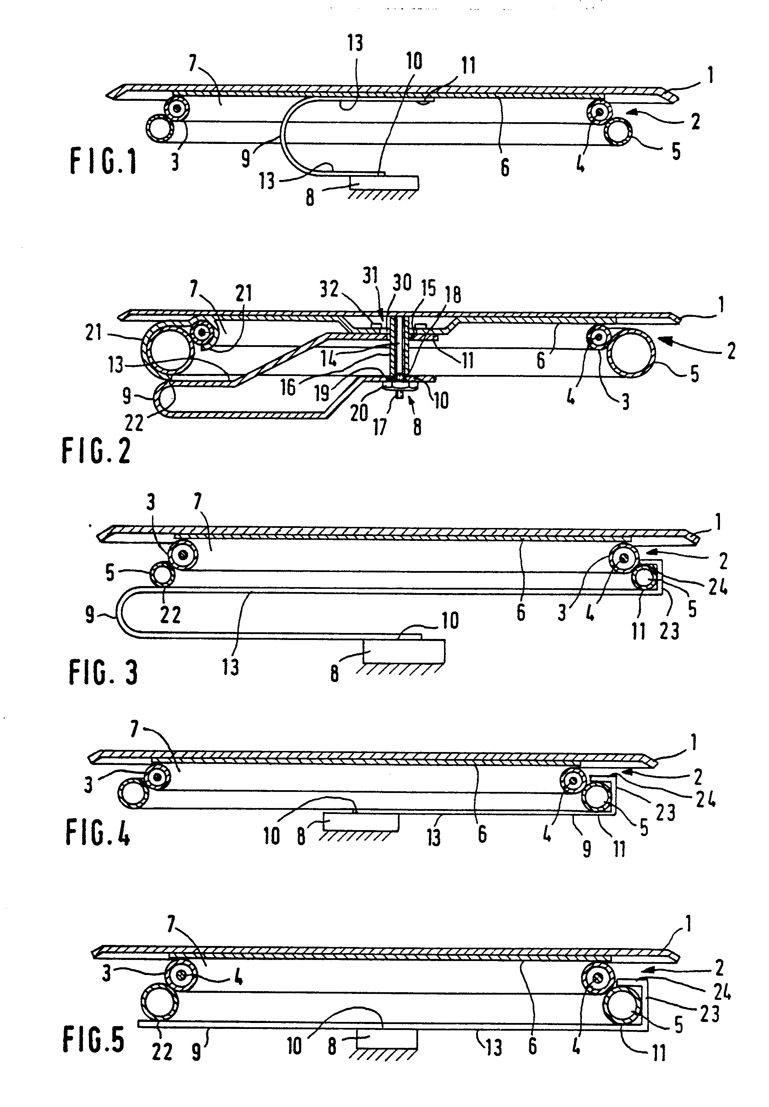

Zur Vermeidung von Wiederholungen und einer unnötig großen Anzahl von Positionnummern werden in den Figuren 1 bis 12 für baugleiche Teile gleiche Positionsnummern verwendet.

In den Figuren 1 bis 11 verläuft unterhalb der kreisscheibenförmigen Warmhalteplatte 1 eine Heizeinrichtung 2, die von einem U-förmig verlaufenden Metallrohr 3, einer Platte 6 und einem Wasserrohr 5 gebildet wird. In dem Metallrohr 3 verläuft konzentrisch ein Heizdraht 4. Der ringförmige Freiraum zwischen dem Metallrohr 3 und dem Heizdraht 4 ist mit Isolationsmaterial gefüllt. Die aus den radial nach außen verlaufenden freien Schenkeln des U-förmigen Metallrohrs 3 herausragenden Enden des Heizdrahtes 4, die in der Zeichnung nicht dargestellt sind, sind mit einer in der Zeichnung ebenfalls nicht dargestellten elektrischen Energiequelle verbindbar. Die Stromzufuhr des Heizdrahtes 4 ist durch einen in der Zeichnung nicht dargestellten elektrischen Thermoschalter regelbar, der die Temparatur des Heizelements 2 überwacht.

An der radial äußeren Wandung des Metallrohrs 3 liegt das Wasserrohr 5 an, das parallel zum Heizelement 2 verläuft und ebenfalls U-förmig ausgebildet ist. Das Wasserrohr 5 ist mit seiner dem Metallrohr 3 zugewandten Oberfläche zum besseren Wärmeübergang mit dem Heizelement 2 verlötet. Auf der Oberseite des Metallrohrs 3 ist eine gut wärmeleitende Platte 6 aufgelötet, die die zwischen dem Metallrohr 3 ausgebildete kreisförmige Fläche 7 von oben abdeckt. In kaltem Zustand des Heizelements 2 liegt die Platte 6 an der Unterseite der Warmhalteplatte 1 an. Das Wasserrohr 5 ist bei diesen Ausführungsbeispielen im Querschnitt größer als das Metallrohr 3 und ist zum Metallrohr 3 so angeordnet, daß sein oberster Randbereich unterhalb der Platte 6 und wie das Metallrohr 3 parallel zu dieser verläuft.

Der radial äußere Randbereich der Warmhalteplatte ist mit einem, in der Zeichnung nicht dargestellten Gehäuse, beispielsweise dem einer Kaffeemaschine, formschlüssig und orstfest verbunden. Die Oberseite der Warmhalteplatte 1 dient zum Aufstellen von Gefäßen, wie beispielsweise Glas-oder Thermoskannen, deren Inhalt, wie beispielsweise Getränke oder andere Nahrungsmittel, durch die Warmhalteplatte 1 erhitzt bzw. warmgehalten werden kann.

Unterhalb der Warmhalteplatte 1 ist ein gehäusefester Anschlag 8 ausgebildet, an dem die Platte 6 in der Zeichnung von unten her durch ein Federelement 9 abgestützt wird. In der dargestellten Ausgangsstellung wird die Platte 6 durch das Federelement 9 gegen die Unterseite der Warmhalteplatte 1 mit Vorspannung gedrückt. In den Figuren 1 bis 6 und 10 wird das Federelement 9 von einem Bimetallstreifen gebildet, der über die erste Kontaktstelle 10 an dem gehäusefesten Anschlag 8 anliegt und der über die zweite Kontaktstelle 11 an der Unterseite der Platte 6 bzw. an dem Wasserrohr 5 oder an dem Heizelement 2 befestigt ist.

Im nicht eingebauten Zustand des Bimetallstreifens 9 an der Warmhalteplatte 1 ist der kürzeste Abstand zwischen den beiden Kontaktstellen 10, 11 größer als er in den Figuren 1 bis 6 und 10 dargestellt ist. Erst beim Zusammenbau wird die erste Kontaktstelle 10 in der Zeichnung soweit nach oben gedrückt, bis sie oberhalb des gehäusefesten Anschlags 8 zur Anlage gelangt, so daß die Platte 6 durch die im Bimetallstreifen 9 erzeugte Vorspannkraft an der Unterseite der gehäusefesten Warmhalteplatte 1 angedrückt wird.

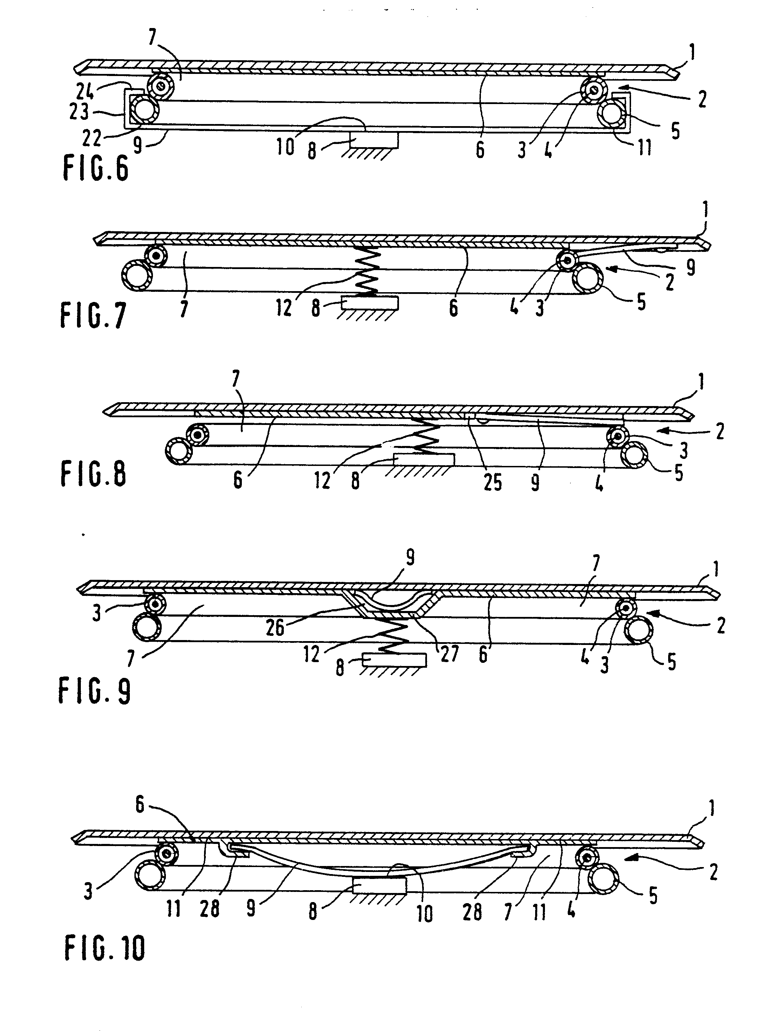

In den Figuren 7 bis 9 und 11 wird die Vorspannkraft von einer zusätzlichen Feder 12 gebildet, die sich an dem gehäusefesten Anschlag 8 abstützt und die mit ihrem anderen Ende an der Unterseite der Platte 6 anliegt und diese somit gegen die Unterseite der Warmhalteplatte 1 drückt. Bei diesen Ausführungsbeispielen regelt der Bimetallstreifen 9 bei Temperaturveränderung nur den Abstand zwischen dem Heizelement 2 und der Warmhalteplatte 1, während die Feder 12 die Anpreßkraft erzeugt.

In Figur 1 ist der Bimetallstreifen 9 im wesentlichen U-förmig ausgebildet und verläuft nur in der kreisförmigen Fläche 7 innerhalb des Heizelements 2 und des Wasserrohrs 5. Die geraden Schenkel 13 des Bimetallstreifens 9 erstrecken sich im wesentlichen parallel zur Platte 6.

In Figur 2 wird der gehäusefeste Anschlag 8 von einer auf einem Zapfen 14 aufgesteckten Hülse 16 gebildet. Der Zapfen 14 ist an der Unterseite der Warmhalteplatte 1, beispielsweise durch Schweißen, befestigt und verläuft senkrecht zur Warmhalteplatte 1 in der Zeichnung nach unten und durchdringt dabei sowohl die in der Platte 6 ausgebildete Bohrung 30 als auch die an den freien Enden des Bimetallstreifens 9 aus-

ges anzten Bohrungen 15 und 19. Der Zapfen 14 ist etwa in der Mitte der Warmhalteplatte 1 befestigt. Die Hülse 16 wird mit ihrem in der Zeichnung oberen Ende an der Warmhalteplatte 1 abgestützt und durchdringt die Bohrungen 30 und 15.

Das freie Ende des Zapfens 14 ragt nach unten aus der Hülse 16 heraus und ist mit einem Gewinde 17 versehen. Die am unteren Ende der Hülse 16 ausgebildete ringförmige Stirnfläche 18 dient als Anschlag für die erste Kontaktstelle 10 des Bimetallstreifens 9. Hierzu ist der Durchmesser der Bohrung 19 geringfügig kleiner als der Außendurchmesser der Hülse 16. Der in der Zeichnung obere Schenkel 13 des Bimetallstreifens 9 ist über einen am Rand der Bohrungen 15, 30 ausgebildeten Bajonettverschluß 31 formschlüssig mit der Platte 6 verbunden. Die am Bimetallstreifen 9 diametral gegenüberliegenden Blechlappen 32 hintergreifen nach der Drehung des Bimetallstreifens 9 die Platte 6 und verbinden somit des Bimetallstreifen 9 formschlüssig mit dem Heizelement 2.

Auf das Gewinde 17 ist in Fig. 2 von unten her eine Mutter 20 aufgeschraubt, die den unteren Schenkel 13 des Bimetallstreifens 9 gegen die Stirnfläche 18 der Hülse 16 verspannt. Die Länge der Hülse 16 ist so bemessen, daß der Bimetallstreifen 9 bei Zimmertemperatur ausreichend vorgespannt ist. Anstelle der Hülse 16 kann auch an dem Zapfen 14 in Höhe der Stirnfläche 18 ein Anschlag in Form einer zweiten Mutter ausgebildet sein. Hierdurch läßt sich die Vorspannkraft des Bimetallstreifens 9 besonders gut einstellen.

In Fig. 2 ist der Bimetallstreifen 9 im wesentlichen U-förmig ausgebildet und erstreckt sich radial soweit nach außen, daß dabei der in der Zeichnung obere Schenkel 13 an der Unterseite des Wasserrohrs 5 zur Anlage gelangt. An der Platte 6 sind am Außenumfang Laschen 21 ausgebildet, die am radial äußeren Rand am Heizelement 2 und am Wasserrohr 5 anliegen. Die Laschen 21 fixieren die Lage des Metallrohrs 3 gegenüber dem Wasserrohr 5, bevor diese Teile miteinander verlötet werden.

Die in Fig. 2 dargestellte Befestigungsvorrichtung des Bimetallstreifens 9 am Heizelement 2 sowie des Heizelements 2 an der Warmhalteplatte 1 kann auch in allen anderen Ausführungsbeispielen der Fig. 1 und 3 bis 12 angewendet werden.

Der in Fig. 3 dargestellte Bimetallstreifen 9 ist ebenfalls U-förmig ausgebildet und liegt mit seiner ersten Kontaktstelle 10 an dem gehäusefesten Anschlag 8 und mit seiner zweiten Kontaktstelle 11 an der Unterseite des Wasserrohrs 5 an. Auch hier liegt, wie in der Beschreibung zur Fig. 2 bereits erläutert, der obere Schenkel 13 mit seiner dritten Kontaktstelle 22 an der Unterseite des Wasserrohrs 5 an. Dadurch, daß der Bimetallstreifen 9 über zwei Stellen 11, 22 am Wasserrohr 5 anliegt, ist eine bessere Aufheizung des Bimetallstreifens 9 möglich. Radial außerhalb der zweiten Kontaktstelle 11 verläuft der Bimetallstreifen 9 anhand eines ersten Abschnitts 23 in der Zeichnung nach oben. Geringfügig oberhalb des Wasserrohrs 5 schließt sich an den ersten Abschnitt 23 ein zweiter Abschnitt 24 an, der sich radial nach innen erstreckt und kurz vor dem Metallrohr 3 endet. Die Abschnitte 23, 24 und der Bereich der zweiten Kontaktstelle 11 umgreifen somit das Wasserrohr 5 derart, daß eine vom Bimetallstreifen 9 ausgehende, senkrecht zur Warmhalteplatte 1 verlaufende Verschiebung zwangsweise auf das Heizelement 2 übertragen wird.

In Fig. 4 besteht der Bimetallstreifen 9 aus nur einem einzigen Schenkel 13, der am gehäusefesten Anschlag 8 beginnt und der sich radial nach außen bis zum Wasserrohr 5 erstreckt. Entsprechend der Fig. 3 sind am radial äußeren Ende ebenfalls erste und zweite Abschnitte 23, 24 ausgebildet, so daß dieses Ende formschlüssig mit dem Wasserrohr 5 verbunden ist. Bei diesem Ausführungsbeispiel ist bei Temperaturänderung die Verformung des Bimetallstreifens 9 bei gleichen Werkstoffen geringer als in den Ausführungsbeispielen entsprechend den Fig. 2 und 3, da die verformbare Länge des Bimetallstreifens kürzer ist.

Das Ausführungsbeispiel gemäß Fig. 5 entspricht im wesentlichen dem Ausführungsbeispiel gemäß Fig. 4. Der Unterschied besteht lediglich darin, daß in Fig. 5 der Schenkel 13 über den gehäusefesten Anschlag 8 in der Zeichnung nach links verlängert ist und dieser Abschnitt zusätzlich noch eine dritte Kontakstelle 22 aufweist, die unterhalb am Wasserrohr 5 anliegt. Durch die verlängerte Ausführung des Schenkels 13 kann die Federrate sowie die Verformung bei Temperaturänderung am Bimetallstreifen 9 erhöht werden.

Das Ausführungsbeispiel in Fig. 6 unterscheidet sich gegenüber dem Ausführungsbeispiel in Fig. 5 nur dadurch, daß sich noch an die dritte Kontakstelle 22 die Abschnitte 23 und 24 gemäß Fig. 4 anschließen, so daß das Wasserrohr 5 an zwei gegenüberliegenden Stellen fest eingespannt ist. Hierdurch wird bei Temperaturänderung das Heizelement 2 parallel von der Warmhalteplatte 1 abgehoben.

In Fig. 7 verläuft der Bimetallstreifen 9 radial außerhalb des Heizelements 2 und ist an seinem radial äußeren Ende mit der Unterseite der Warmhalteplatte 1 formschlüssig befestigt. Das radial innere Ende liegt mit seinem frei bewegbaren Ende auf der Oberseite des Hezelements 2 an. Bei Temperaturerhöhung verschiebt sich das freie Ende des Bimetallstreifens 9 von der Warmhalteplatte 1 nach unten weg und hebt dabei entgegen der Kraft der Feder 12 das Heizelement 2 von der Warmhalteplatte 1 ab.

Das Ausführungsbeisdpiel in Fig. 8 unterscheidet sich gegenüber dem Ausführungsbeispiel in Fig. 7 nur dadurch, daß der Bimetallstreifen 9 radial innerhalb des Heizelements 2 an der Warmhalteplatte 1 befestigt ist und radial nach außen bis zum Heizelement 2 verläuft und dort mit seinem freien Ende an der Oberseite des Metallrohrs 3 anliegt. Damit die Platte 6 bündig an der Warmhalteplatte anliegen kann, ist im Bereich des Bimetallstreifens 9 an der Platte 6 eine Ausnehmung 25 ausgebildet.

In Fig. 9 ist der Bimetallstreifen 9 zwischen der Platte 6 und der Warmhalteplatte 1 angeordnet. Der Bimetallstreifen 9 ist nach unten gewölbt und liegt in einer in der Platte 6 ausgebildeten Vertiefung 26. Der Bimetallstreifen 9 stützt sich auf der einen Seite mit seinen freien Enden an der Warmhalteplatte 1 und auf der anderen Seite im Bereich des tiefsten Punktes am Boden 27 der Vertiefung 26 ab. Bei diesem Ausführungsbeispiel kann der Bimetallstreifen 9 lose in der Vertiefung 26 liegen, da der Bimetallstreifen 9 in der Vertiefung 26 geführt und von oben durch die Warmhalteplatte 1 begrenzt wird.

In Fig. 10 ist der Bimetallstreifen 9 unterhalb der Platte 6 angeordnet und ist nach unten gewölbt. Die freien Enden liegen an der Unterseite der Platte 6 an und sind über an der Unterseite der Platte 6 hervorstehende Blechlappen 28 in der Platte 6 gehalten. Im Bereich des tiefsten Punktes stützt sich der Bimetallstreifen 9 an dem gehäusefesten Anschlag 8 ab.

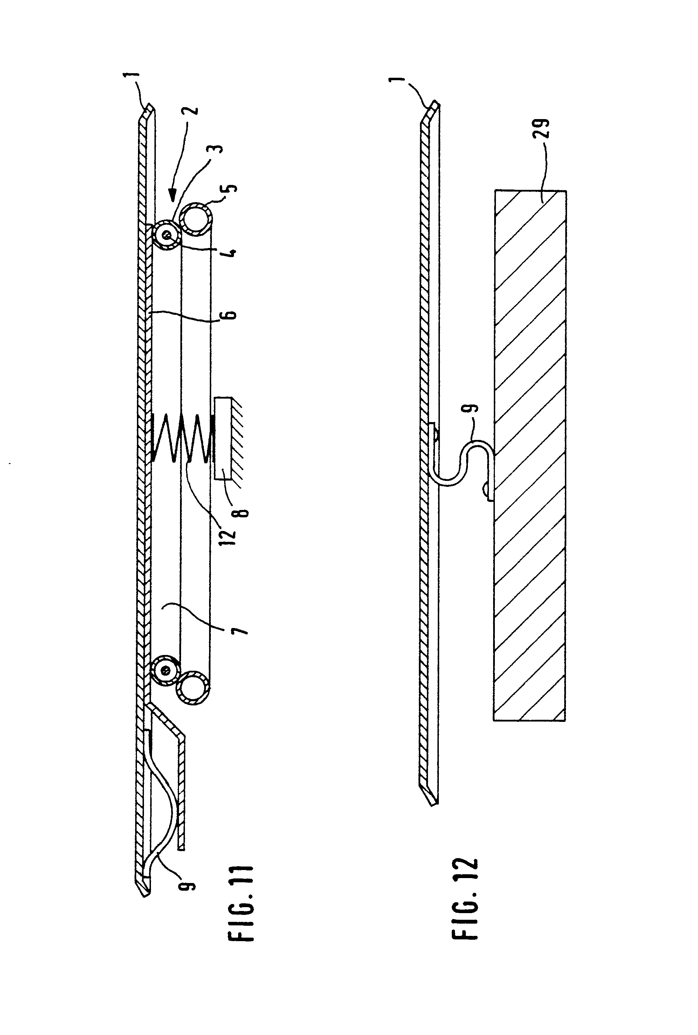

Das Ausführungsbeispiel in Fig. 11 entspricht im wesentlichen dem Ausführungsbeispiel in Fig. 9. Der Unterschied besteht lediglich darin, daß der nach unten gewölbte Bimetallstreifen 9 radial außerhalb des Metallrohrs 3 und des Wasserrohrs 5 zwischen der Platte 6 und der Warmhalteplatte 1 ausgebildet ist. Bei Temperaturerhöhung des Bimetallstreifens 9 kann das Heizelement 2 nur einseitig von der Warmhalteplatte 1 abheben.

In Fig. 12 ist unterhalb der Warmhalteplatte 1 ein Wärmespeicher 29 mit einer integrierten Heizung (nicht dargestellt) angeordnet, dessen Abstand zur Warmhalteplatte 1 durch einen zwischen der Warmhalteplatte 1 und dem Wärmespeicher 29 ausgebildeten Bimetallstreifen 9 bestimmt wird. Der Bimetallstreifen 9 ist im wesentlichen S-förmig ausgebildet und ist mit seinem oberen Ende mit der Warmhalteplatte 1 und mit seinem unteren Ende mit dem Wärmespeicher 29 formschlüssig verbunden.

Die Wirkungsweise der thermischen Regelung der Warmhalteplatte 1 ist folgende.

Bei normaler Zimmertemperatur nehmen die Heizelement 2 die in den Fig. 1 bis 11 dargestellte Ausgangslage ein, d.h., sie werden durch die Vorspannkraft des Bimetallstreifens 9 bzw. durch die Vorspannkraft der Feder 12 gegen die Unterseite der Warmhalteplatte 1 gepreßt. Wird nun das Heizelement 2 erhitzt, so wird dabei auch der Bimetallstreifen 9 erwärmt. Bei denjenigen Ausführungsbeispielen, bei denen der Bimetallstreifen 9 gleichzeitig vorgespannt ist, wird bei Temperaturerhöhung erst die Vorspannkraft abgebaut. Bei diesem Vorgang tritt zunächst keine spürbare Verformung an dem Bimetallstreifen 9 auf, d.h., das Heizelement 2 wird noch gegen die Warmhalteplatte 1 gepreßt, die sich somit in kü zester Zeit aufheizen kann. Bei denjenigen Ausführungsbeispielen, bei denen die gesonderte Feder 12 vorhanden ist, wird sich ebenfalls der Bimetallstreifen 9 nicht solange sichtbar verformen, bis er die Vorspannkraft der Feder 12 erreicht hat.

Sobald aber die Vorspannkraft im temperaturempfindlichen Element 9 abgebaut bzw. die Vorspannkraft des temperaturempfindlichen Elements 9 die Vorspannkraft der Feder 12 ereicht hat, verbiegt sich der Bimetallstreifen 9 derart, daß durch ihn das Heizelement 2 von der Warmhalteplatte 1 abgehoben wird. Entsprechend der Lagerung des Bimetallstreifens 9 verschiebt sich dabei die Platte 6 parallel zur Warmhalteplatte 1 oder sie kippt einseitig von der Warmhalteplatte 1 nach unten weg. Hierbei entsteht zwischen der Platte 6 und der Warmhalteplatte 1 ein Luftraum, durch den der Wärmeübergang vom Heizelement 2 zur Warmhalteplatte 1 reduziert wird. Je größer der Luftraum wird, desto weniger kann sich die Warmhalteplatte 1 erwärmen. Kühlt sich das Heizelement 2 aufgrund der elektrischen Stromabschaltung durch einen in der Zeichnung nicht dargestellten Thermoschalter ab, so sinkt auch die Temperatur am Bimetallstreifen 9, der dann wieder eine Annäherung der Platte 6 an die Warmhalteplatte 1 bewirkt. Hierdurch wird auf einfache Weise die Temperatur der Warmhalteplatte 1 und somit auch die Temperatur von Getränken oder anderen Nahrungsmitteln, die sich in einem auf der Warmhalteplatte 1 abgestellten Behälter befinden, automatisch geregelt, so daß eine Überhitzung nicht erfolgen kann.

**Ansprüche**

1. Warmhalteplatte, insbesondere für eine elektrische Kaffeemaschine, mit einer unter der Warmhalteplatte angeordneten elektrischen Heizeinrichtung, wobei die Wärmeankoppelung der Heizeinrichtung an die Warmhalteplatte durch Einstellung des Abstands zwischen der Heizeinrichtung und der Warmhalteplatte veränderbar ist, dadurch gekennzeichnet, daß der Abstand durch ein temperaturempfindliches Element (9) regelbar ist.

2. Warmhalteplatte nach Anspruch 1, wobei die Heizeinrichtung gegenüber der Warmhalteplatte verschiebbar ist, dadurch gekennzeichnet , daß das temperaturempfindliches Element (9) über mindestens eine erste Kontaktstelle (10) mit einem gehäusefesten Anschlag (8) und der über mindestens eine zweite Kontaktstelle (11) mit der Heizeinrichtung (2 und/oder 5 und/oder 6) verbunden ist.

3. Warmhalteplatte nach Anspruch 2, dadurch gekennzeichnet, daß im unteren Temperaturbereich die Heizeinrichtung (2, 6) mit einer Vorspannkraft an der Warmhalteplatte (1) anliegt und daß mit zunehmender Temperatur die Heizeinrichtung (2, 6) von der Warmhalteplatte (1) wegbewegbar ist.

4. Warmhalteplatte nach Anspruch 3, dadurch gekennzeichnet, daß die Vorspannkraft durch das temperaturempfindliche Element (9) selbst gebildet wird, die bei zunehmender Temperatur des temperaturempfindlichen Elements (9) abnimmt.

5. Warmhalteplatte nach einem der vorhergehenden Ansprüche 2 bis 4, dadurch gekennzeichnet, daß die erste Kontaktstelle (10) des temperaturempfindlichen Elements (9) an der Warmhalteplatte (1) und daß die zweite Kontaktstelle (11) an der Heizeinrichtung (2 und/oder 5 und/oder 6) formschlüssig befestigt ist.

6. Warmhalteplatte nach einem der vorhergehenden Ansprüche 2 bis 5, dadurch gekennzeichnet , daß das temperaturempfindliche Element (9) im wesentlichen U-förmig ausgebildet ist und daß die freien Enden des temperaturempfindlichen Elements (9) die Kontaktstellen (10, 11) bilden.

7. Warmhalteplatte nach Anspruch 6, dadurch gekennzeichnet, daß das temperaturempfindliche Element (9) zusätzlich zu den beiden Kontaktstellen (10, 11) mindestens eine dritte Kontaktstelle (22) aufweist, die an der Heizeinrichting (2 und/oder 5 und/oder 6) anliegt.

8. Warmhalteplatte nach den Ansprüchen 2 bis 7, wobei die Heizeinrichtung aus einer U-förmig verlaufenden Heizschleife besteht, auf deren im wesentlichen parallel zur Warmhalteplatte verlaufender Oberseite eine Platte befestigt ist, dadurch gekennzeichnet, daß auf der dem Heizelement (2) gegenüberliegenden Unterseite der Warmhalteplatte (1) ein Zapfen (14) angeordnet ist, daß der Zapfen (14) die Platte (6) und die beiden freien Enden des temperaturempfindlichen Elements (9) über an diesen Teilen ausgebildete Bohrungen (15, 19, 30) durchdringt und daß die erste Kontakstelle (10) ortsfest mit der Platte (6) und die zweite Kontaktstelle (11) ortsfest mit dem Zapfen (14) verbunden ist.

9. Warmhalteplatte nach Anspruch 8, dadurch gekennzeichnet, daß zum Einstellen der Vorspannkraft an der Befestigungsstelle zwischen dem Zapfen (14) und dem temperaturempfindlichen Element (9) eine Justiereinrichtung (16, 17, 20) ausgebildet ist.

10. Warmhalteplatte nach Anspruch 9, dadurch gekennzeichnet, daß die erste Kontaktstelle (10) über einen Bajonettverschluß (31) mit der Platte (6) formschlüssig verbunden ist.

11. Warmhalteplatte nach einem der vorhergehenden Ansprüche, dadurch gekennzeichnet, daß am Außenumfang parallel zum Heizelement (2) ein Wasserrohr (5) verläuft, das über den größten Bereich am Heizelement (2) angelötet ist und das in geringem Abstand zur Platte (6) verläuft.

12. Warmhalteplatte nach Anspruch 11, dadurch gekennzeichnet, daß im montierten Zustand des temperaturempfindlichen Elements (9) dieser mit seinem der Heizschleife (2) näheren Schenkel (13) mit Vorspannung an dem Wasserrohr (5) anliegt.

13. Warmhalteplatte nach einem der vorhergehenden Ansprüche, dadurch gekennzeichnet, daß das temperaturempfindliche Element (9) ein Bimetallstreifen ist.

14. Warmhalteplatte nach einem der vorhergehenden Ansprüche, dadurch gekennzeichnet , daß die elektrische Heizeinrichtung gleichzeitig einen Wärmespeicher (29) bildet.

15. Warmhalteplatte nach eionem der vorhergehenden Ansprüche, dadurch gekennzeichnet, daß das temperaturempfindliche Element (9) aus einem Memory-Metall besteht.

16. Warmhalteplatte nach Anspruch 14, dadurch gekennzeichnet, daß die Wärmeankoppelung des Wärmespeichers (29) an die Warmhalteplatte (1) durch einen zwischen dem Wärmespeicher (29) und der Warmhalteplatte (1) ausgebildeten Werkstoff regelbar ist, der einen temperaturabhängigen Wärmeleitkoeffizienten aufweist.

FIG.1

FIG.2

FIG. 3

FIG.4

FIG.5

FIG.6

FIG.7

FIG.8

FIG.9

FIG.10

FIG.11

FIG.12

1 2 3 5 4 6 7 8 12 9 29

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 026 939 (ANTIMOVSKI) <br><br> * Insgesamt * | 1-5,13 ,14 | A 47 J 31/54 <br> H 05 B 3/68 <br> F 24 C 15/10 |
| | --- | | |
| X | GB-A-1 026 882 <br> (MORPHY-RICHARDS) <br> * Insgesamt * | 1-3,5, 13,14 | |
| | --- | | |
| A | US-A-2 782 782 (TAYLOR) <br> * Insgesamt * | 1 | |
| | --- | | |
| D,A | FR-A-2 299 783 (BOSCH-SIEMENS) | | |
| | ----- | | |

RECHERCHIERTE
SACHGEBIETE (Int. Cl.4)

A 47 J
H 05 B
F 24 C
D 06 F

Der vorliegende Recherchenbericht wurde für alle Patentansprüche erstellt.

| Recherchenort | Abschlußdatum der Recherche | Prüfer |
|---|---|---|
| DEN HAAG | 08-01-1987 | SCHARTZ J. |